# EUROPÄISCHE PATENTSCHRIFT

(11) **EP 2 759 670 B1**
(45) Veröffentlichungstag und Bekanntmachung des Hinweises auf die Patenterteilung: **15.03.2017**
(21) Anmeldenummer: 14151748.2
(22) Anmeldetag: 20.01.2014
(51) Int. Cl.: E05F 15/632, E05D 15/10, B60J 5/06, B61D 19/00, B61D 19/02

(54) **Türanordnung mit Verriegelungssystem**
Door assembly with locking system
Agencement de porte doté d'un système de verrouillage

(30) Priorität: 25.01.2013 DE 202013100356 U
(43) Veröffentlichungstag der Anmeldung: 30.07.2014
(73) Patentinhaber: Gebr. Bode GmbH & Co. KG, 34123 Kassel (DE)
(72) Erfinder: Pellegrini, Andreas, 34295 Edermünde (DE)
(74) Vertreter: Patentanwälte Bauer Vorberg Kayser

(56) Entgegenhaltungen:
- EP-B1- 0 820 889

## Beschreibung

Die Erfindung bezieht sich auf eine Türanordnung für ein Fahrzeug mit mindestens einem Türflügel, wobei der Türflügel von einem Schließzustand, in dem der Türflügel eine Portalöffnung in einer Wand des Fahrzeugs ausfüllt in einen Öffnungszustand, in dem sich der Türflügel vor der Wand und zumindest weitgehend außerhalb der Portalöffnung befindet, bewegbar ist.

Aus der EP 820 889 B1 ist ein Türantrieb der eingangs genannten Art bekannt. Es handelt sich um ein so genanntes Schwenk-Schiebetür-System, bei dem ausgehend von einem Schließzustand der zumindest eine Türflügel zunächst quer zu einer Portalöffnung im Fahrzeug bewegt wird, bis er ausreichend vor der Portalöffnung ist, und anschließend in Längsrichtung aus der Portalöffnung weggeschoben wird. Im geöffneten Zustand befindet er sich knapp außerhalb der Fahrzeugwand und weitgehend parallel zu dieser.

Antriebe dieser Art haben sich ausgesprochen bewährt, sie sind insbesondere für Fahrzeuge des öffentlichen Nah- und Fernverkehrs geeignet. Sie ermöglichen das Öffnen großer Portalöffnungen in relativ kurzer Zeit und ohne das im Öffnungszustand störende Türflügel den Durchgang behindern. Oftmals sind derartige Türen als Doppeltüren ausgelegt, weisen also zwei Türflügel auf.

Zum Stand der Technik wird weiterhin auf die DE 4 133 179 und die EP 1 040 979 A2 verwiesen.

Für die Beschreibung wird ein x-y-z-Koordinatensystem verwendet. Die x-Achse liegt in Fahrtrichtung nach vorn des Fahrzeugs, die y-Achse verläuft rechtwinklig zur Portalöffnung bzw. zur senkrechten Fahrzeugwand in Fahrtrichtung nach links. Die x- und y-Achse spannen eine waagerechte Ebene auf. Die z-Achse verläuft senkrecht nach oben. Es ergeben sich somit eine Fahrzeuglängsachse x-x, eine Fahrzeugquerachse y-y und eine Fahrzeughochachse z-z.

Im praktischen Fahrbetrieb ist die Fahrzeugwand nicht starr, vielmehr bewegt sie sich. Diese Bewegungen sind beispielsweise bedingt durch Ungenauigkeiten bei der Verlegung von Schienen, auf denen das Fahrzeug abläuft, Unebenheiten der Straßenoberflächen usw.. Dies führt dazu, dass sich die Türanordnung und insbesondere die Türflügel bewegen und in gewissem Maße verwinden. Die Türflügel werden dabei auch aus der Fahrzeughochachse heraus bewegt, sie stellen sich sozusagen schräg. Derartige fahrzeugbedingte Relativbewegungen können zu einem Verklemmen des Türantriebs führen, dem entgegengewirkt werden muss.

Die Kompensation dieser unvermeidbaren Bewegungen erfolgt im Stand der Technik beispielsweise über die Elastizität der Bauteile, und/oder die Türflügel sind über Schwenklager, die ein Verschwenken des Türflügels aus der Hochachse bzw. der y-Achse heraus ermöglichen, an einem im Türportal verschiebbaren Antriebsträger gehalten. Diese Lager müssen nahezu das gesamte Gewicht der Tür tragen und entsprechend massiv ausgelegt sein. Hinzu kommt, dass die Herstellung und Montage solcher Lager hohe Kosten verursacht.

Trotz allem hat sich gezeigt, dass Verriegelungssysteme derartiger Türanordnungen aufgrund der Bewegungen der Türflügel oftmals nicht dauerhaft zuverlässig schließen oder mit anderen Störungen behaftet sind, da die an den beweglichen Bauteilen (beispielsweise am Türflügel) und an den starren Bauteilen (beispielsweise am Türportal) befindlichen Verriegelungselemente auf Dauer beim Schließvorgang nicht zuverlässig ineinanderlaufen, weil sich deren Position im Laufe der Zeit relativ zueinander verstellt hat. Die Verriegelungssysteme müssen deshalb vielfach in relativ kurzen Intervallen gewartet und neu eingestellt werden, was wiederum mit hohem Kostenaufwand verbunden ist.

Bei bekannten Verriegelungssystemen nach dem Stand der Technik fährt das Verriegelungssystem mit den bewegbaren Bauteilen beim Öffnungs- und Schließvorgang mit, während ein starrer Verriegelungsbolzen im Türportal angeordnet ist. Der Antriebsmotor für die Türbewegung treibt eine Drehfalle an, die den Verriegelungsbolzen im eingefahrenen Zustand der Tür hintergreift. Um diese Doppelnutzung des Antriebsmotors zu ermöglichen, muss dieser in der Regel verschwenkbar ausgeführt sein, was ebenfalls mit hohem Kosten- und Montageaufwand verbunden ist.

Die Erfindung hat es sich zum Ziel gemacht, Türantriebe dahingehend weiterzubilden, dass trotz der Bewegungen und des Verschwenkens des Türflügels eine möglichst dauerhaft zuverlässige Verriegelung gewährleistet ist. Dieses Ziel soll mit möglichst einfachen Mitteln erreicht werden, die kostengünstig und einfach zu montieren und zu warten sind. Die Türanordnung soll Bewegungen kompensieren können und auch bei längerer Benutzungsdauer dauerhaft zuverlässig funktionieren.

Diese Aufgabe wird ausgehend von der vorbekannten Türanordnung durch die Merkmale des Anspruchs 1 gelöst.

Das erfindungsgemäße Verriegelungssystem weist eine neuartige und innovative Türlagerung auf, bei der die massiven und kostenaufwendigen Schwenklager, über die der Türflügel üblicherweise am Antriebsträger befestigt ist, entfallen. Die notwendige Schwenkbarkeit des Türflügels wird dadurch erreicht, dass zumindest auf einer Seite endseitig am Antriebsträger angeordnete Führungsrollen, die in Querführungen laufen, als Schwenklager genutzt werden. Es verschwenkt also nicht mehr der Türflügel gegenüber dem Antriebsträger, sondern vielmehr wird ermöglicht, dass sich der Antriebsträger um seine Längsachse drehen kann oder vielmehr um diese verschwenkbar ist. Ein Verdrehen oder Verschwenken des Antriebsträgers um seine Längsachse, also um die Drehachse einer Trägerwelle der Führungsrollen bewirkt, dass der Türflügel aus seiner Hochachse heraus bewegbar ist.

Erfindungsgemäß kann auch vorgesehen sein, dass die Führungsrollen auf beiden Seiten des Antriebsträgers als Schwenklager genutzt werden. Die Entscheidung, ob nur eine Seite oder beide Seiten des Antriebsträgers als Antriebslager ausgeführt sein sollten, ist von den jeweiligen Einbausituationen abhängig. Eine nur einseitige Schwenklagerung ist gegebenenfalls robuster, kostgünstiger und wartungsärmer, die beidseitige schwenkbare Lagerung dagegen zuverlässiger und leichtgängiger. In beiden Fällen sind endseitig Führungsrollen vorgesehen, bei einer endseitigen Schwenklagerung ist gegenüberliegende andere Führungsrolle gegenüber dem Antriebsträger starr ausgeführt.

Ein wesentlicher Vorteil besteht dabei darin, dass die als Schwenklager genutzten Führungsrollen üblicherweise ohnehin vorhanden sind und somit eine weitere Kosteneinsparung ermöglicht wird. Weiterhin können Schwenklager, die über Führungsrollen realisiert werden, weniger massiv ausgelegt werden, wodurch das Gesamtgewicht der Türanordnung reduziert werden kann.

Die Querführungen sind bevorzugt als Profilschienen ausgebildet, die in einem mit dem Türportal starr verbundenen Halteteil angeordnet sind.

Vorteilhafterweise ist innerhalb der Profilschiene ausreichend Luft für eine Bewegung der Führungsrollen vorgesehen, so dass die Führungsrolle im praktischen Betrieb des Fahrzeugs nicht mit zu starker Belastung an der Profilschiene anliegt, vielmehr die zulässige Relativbewegung ermöglicht wird.

Die endseitig am Antriebsträger angeordneten Führungsrollen laufen auf unteren Laufschienen, kontaktieren dabei aber gleichzeitig obere Laufschienen, wodurch sie in vertikaler Richtung gehalten sind. Vorteilhafterweise sind die beiden Laufschienen konvex ausgeführt, während Laufflächen der Führungsrollen konkav ausgeführt sind. Durch die konvexe und konkave Ausführung der beiden Elemente sind die Führungsrollen auch in horizontaler Richtung gehalten. Die Führungsrollen sind über die Trägerwelle drehbar am Antriebsträger gelagert.

Beim Öffnungsvorgang wird der Antriebsträger über die Führungsrollen in den Querführungen zunächst entlang der Fahrzeugquerachse aus dem Türportal heraus bewegt. Anschließend kann dann der Türflügel, der im Antriebsträger verfahrbar ist, entlang der Fahrzeuglängsachse und parallel zur Wand des Fahrzeugs verfahren werden. Die Bewegungsrichtungen sind dabei auf ein seitlich im Fahrzeug angeordnetes Türportal bezogen. Ist das Türportal vorne oder hinten quer zur Fahrzeuglängsachse angeordnet, verschieben sich die Bewegungsrichtungen entsprechend.

Die Führungsrollen können unmittelbar mit dem Antriebsträger verbunden sein, sie können aber auch über ein Zwischenelement, beispielsweise eine Rollenplatte am Antriebsträger gehalten sein. Auch können anstelle nur einer Führungsrolle je Seite, mehrere, vorzugsweise drei Führungsrollen vorgesehen sein, was ggf einer besseren Lastabtragung dient. Die Führungsrollen sind in diesem Fall jeweils über Achsstummel an einer gemeinsamen Rollenplatte angelenkt, die wiederum über die Trägerwelle drehbar am Antriebsträger angelenkt ist.

Erfindungsgemäß weist ein Antriebsträger, der den Türflügel trägt und bewegt, einen Verriegelungsbolzen auf, der im Schließzustand der Tür durch ein entsprechendes Verriegelungselement, beispielsweise eine Drehfalle, gehalten wird und die Tür sicher verschließt. Im Gegensatz zum Stand der Technik ist also nicht das anzutreibende Verriegelungselement am Antriebsträger angeordnet, sondern der starre Verriegelungsbolzen. Entsprechend treibt auch der auf dem Antriebsträger mitfahrende Antriebsmotor nicht das bewegbare Verriegelungselement an, sondern ist ausschließlich für die Bewegung der Tür zuständig. Entsprechend kann der Antriebsmotor einfacher ausgelegt sein, auch ist es nicht notwendig, ihn zum Antrieb des Verriegelungselements zusätzlich zu schwenken oder zu drehen. Das Verriegelungselement, z.B. die Drehfalle kann über einen einfachen, ebenfalls am Türportal angeordneten Aktuator angetrieben werden. Insgesamt wird damit die zu bewegende Masse geringer und der Gesamtaufbau einfacher und robuster.

Der mitfahrende Verriegelungsbolzen ist derart angeordnet, dass er sich nicht mit dem Antriebsträger oder der Trägerwelle mitdreht, sondern vielmehr auch bei einem Verschwenken des Antriebsträgers um seine Längsachse aufrecht ausgerichtet bleibt. Dies ist beispielsweise dadurch erreichbar, dass der Verriegelungsbolzen über ein Bolzenhalteelement drehbar auf der Trägerwelle gelagert ist. Die Trägerwelle dreht sich dann innerhalb des Bolzenhalteelements, ohne dieses mit zubewegen. Das Bolzenhalteelement ist dabei vorzugsweise mit der Rollenhalterung verbunden, an der wiederum zwei Stützrollen angeordnet sind. Die Führungsrolle ist zwischen den beiden Stützrollen angeordnet, wobei alle Rollen auf der unteren Laufschiene laufen. Die Stützrollen weisen vorzugsweise einen kleineren Durchmesser als die Führungsrolle auf. Die Rollenplatte mit den beiden Stützrollen bewirkt, dass der Verriegelungsbolzen stets in seiner vorzugsweise lotrechten Position verbleibt. Grundsätzlich ist aber auch die Verwendung von nur einer Stützrolle, die in der Querführung geführt ist, möglich.

Alternativ zur Position im Bereich der Trägerwelle kann der Verriegelungsbolzen auch an einer anderen Stelle des Antriebsträgers angeordnet sein. Wesentlich ist, der er unabhängig vom Antriebsträger verschwenkbar ist bzw. Schwenkbewegungen des Antriebsträgers um dessen Langsachse nicht mitmacht.

Der vorzugsweise im Wesentlichen horizontal gelagerte Antriebsträger weist eine Längsführung für den Türflügel auf, so dass dieser entlang der X-Achse bzw. Fahrzeuglängsachse parallel zur Wand verfahrbar ist. Diese Längsführung kann durch beliebige bekannte Elemente realisiert werden, insbesondere bietet sich eine Rollenführung an, in der mit dem Türflügel verbundene Rollen geführt sind. Alternativ ist auch denkbar, dass die Rollen an dem Antriebsträger angeordnet sind und der Türflügel entsprechend eine mit den Rollen zusammenwirkende Laufschiene aufweist.

Vorzugsweise ist die Längsführung für die Rollen jedoch am Antriebsträger angeordnet. Auch diese weist eine untere und eine obere Laufschiene auf, in der die Rollen geführt und in vertikaler Richtung gehalten sind. Vorzugsweise sind die Laufschienen konkav und die Laufflächen der Rollen konvex ausgeführt, um somit die Rollen auch in horizontaler Richtung zu halten.

In einer besonders vorteilhaften Ausführungsvariante sind die Rollen nicht unmittelbar am Türflügel, sondern in horizontaler Richtung nebeneinander an einem Rollenläufer angeordnet, der wiederum mit dem Türflügel verbunden ist.

Erfindungsgemäß kann vorgesehen sein, dass jeweils mehrere Rollen, vorzugsweise vier Rollen gruppenweise an einem Rollenhalter gelagert sind, der wiederum über ein Schwenk- oder Drehlager am Rollenläufer befestigt ist. Somit sind die gemeinsam an einem am Rollenhalter angeordneten Rollen um eine gemeinsame Schwenkachse, die durch das Drehlager des Rollenläufers verläuft, gemeinsam verschwenkbar. In einer besonders vorteilhaften Variante sind beispielsweise zwei Rollenhalter mit jeweils vier Rollen vorgesehen, die nebeneinander am Rollenläufer schwenkbar befestigt sind. Der Rollenläufer ist mit einem seiner freien Enden mit dem über eine vorzugsweise drehbare Türflügelbefestigung verbunden, so dass die Gewichtskraft des Türflügels den Rollenläufer endseitig nach unten in Richtung Untergrund zieht. Hierdurch werden die der Türflügelbefestigung des Rollenläufers benachbarten Rollen auf die untere Laufschiene gezogen, während sich die benachbarten, weiter von der Türflügelbefestigung entfernten Rollen gegen die obere Laufschiene abstützen. Durch diese erfindungsgemäße Anordnung wird das durch das Türflügelgewicht auftretende Drehmoment am Rollenläufer auf alle Rollen verteilt. Dies verbessert die Langlebigkeit und Zuverlässigkeit der Türanordnung zusätzlich.

Vorteilhafterweise ist der Türflügel nicht nur an einer Längsseite, sondern auf beiden Längsseiten des Antriebsträgers über Rollen gelagert. Zumindest eine Rolle ist auf der dem Türflügel zugewandten Seite des Antriebsträgers in einer entsprechenden Laufschiene geführt, mindestens eine zweite Rolle auf der dem Türflügel abgewandten Seite des Antriebsträgers in einer parallel verlaufenden zweiten Laufschiene. Der Rollen- und Laufschienenaufbau ist dabei vorzugsweise auf beiden Seiten des Antriebsträgers identisch. Bei dieser Ausführungsvariante sind die Rollen an zwei L-Profilen gelagert. Die Rollen sind entsprechend über Achsstummel in den Innenseiten der Schenkel der L-Profile gelagert. Vorzugsweise sind auf beiden Seiten des Antriebsträgers jeweils zwei Rollenhalter mit je vier Rollen angeordnet.

Durch die stets aufrechte und exakte Positionierung des Veriegelungsbolzens ist gewährleistet, dass dieser stets das zugehörige Verriegelungselement beim Einschwenken der Tür trifft. Nachjustierungen und Störungen beim Schließvorgang werden hierdurch minimiert.

Weitere Vorteile und Merkmale der Erfindung ergeben sich aus den übrigen Ansprüchen sowie der nun folgenden Beschreibung eines nicht einschränkend zu verstehenden Ausführungsbeispiels der Erfindung, das unter Bezugnahme auf die Zeichnung näher erläutert wird. In dieser zeigen:
- Fig. 1:: eine perspektivische Darstellung eines Türantriebs für zwei hier nicht dargestellte Türflügel,
- Fig. 2:: eine vergrößerte Darstellung eines Verriegelungssystems aus Figur 1,
- Fig. 3:: eine perspektivische Darstellung des Verriegelungssystems aus Fig. 1,
- Fig. 4:: die Lagerung eines Antriebsträgers in Querführungen im Schnitt,
- Fig. 5:: eine vergrößerte Darstellung der seitlichen Lagerungselemente des Antriebsträgers,
- Fig. 6:: eine vergrößerte Darstellung der Lagerung eines Türflügels im Antriebsträger,
- Fig. 7:: die Lagerung des Türflügels im Antriebsträger im Schnitt.

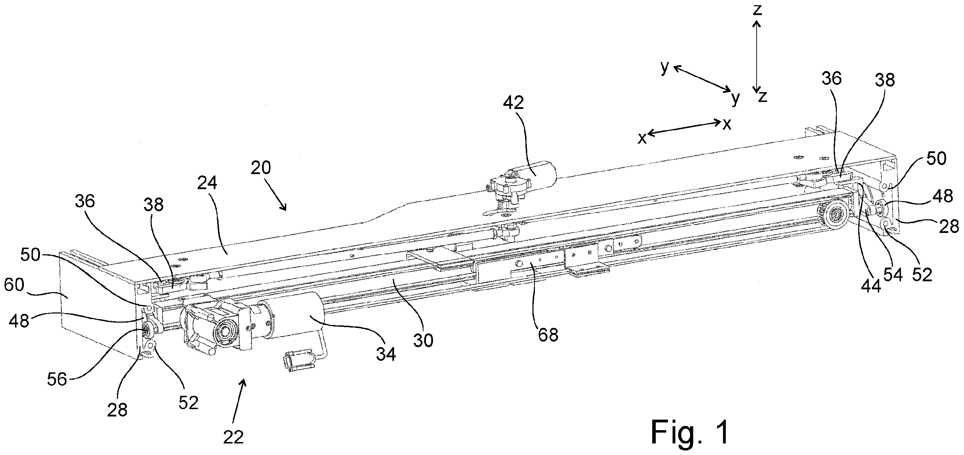

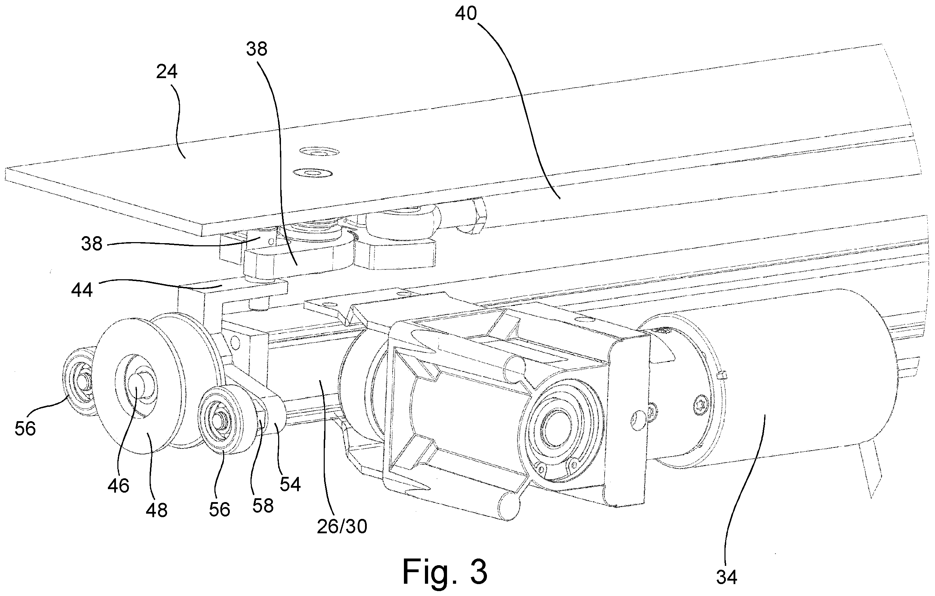

Insbesondere die Figuren 1 bis 3 verdeutlichen den Aufbau und die Funktion einer Ausführungsform des erfindungsgemäßen Verriegelungssystems 20. Figur 1 zeigt dabei, dass ein Türantrieb 22, der das Verriegelungssystem 20 aufweist, in einer Art Rahmen 24 angeordnet ist, der sich oberhalb einer nicht gezeigten Türöffnung befindet.

Ein Antriebsträger 26, der zumindest einen, oftmals auch zwei nicht gezeigte Türflügel trägt, ist zwischen zwei quer zu seiner Längsachse verlaufenden Querführungen 28 geführt. Die Querführungen 28 verlaufen im Wesentlichen entlang einer y-Achse, die rechtwinklig zur Portalöffnungsebene verläuft. Die Längsachse des Antriebsträgers 26 verläuft dementsprechend entlang einer Achse X-X, die üblicherweise bei Fahrzeugen des öffentlichen Nah- und Fernverkehrs der Fahrzeuglängsachse entspricht.

Der Antriebsträger 26 weist eine Längsführung 30 für einen nicht gezeigten Türflügel auf, über den dieser entlang einer Fahrzeuglängsachse X-X parallel zur Wand verfahrbar ist.

Der mindestens eine Türflügel ist dabei über ein Türflügelbefestigungselement 32 mit dem Antriebsträger 26 verbunden bzw. über das Türflügelbefestigungselement 32 in der Längsführung 30 geführt.

Weiterhin ist ein Antriebsmotor 34, vorzugsweise ein Elektromotor, gezeigt, der den Antriebsträger 26 in den Querführungen 28 und auch das Türflügelbefestigungselement 32 in der Längsführung 30 antreibt.

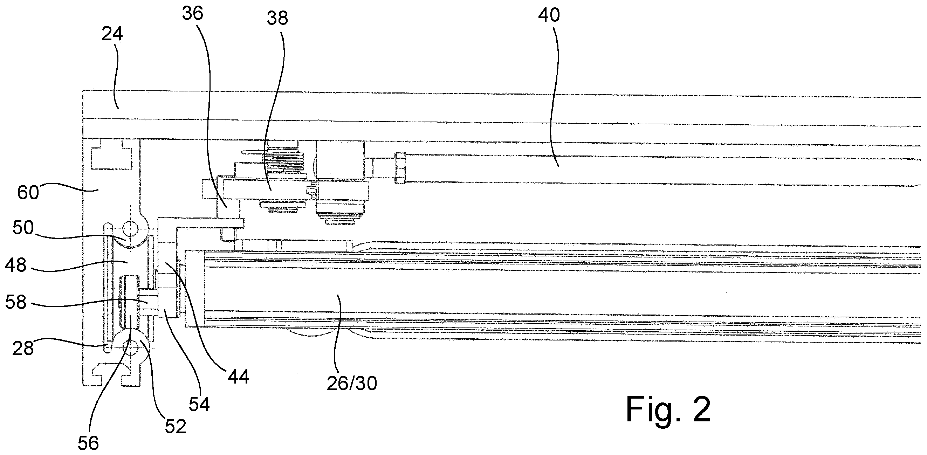

Figur 2 zeigt die wesentlichen Elemente des Verriegelungssystems 20. Ein Verriegelungsbolzen 36 ist am Antriebsträger 26 befestigt und wird mit diesem entlang der Querachse Y-Y mitbewegt. Der Verriegelungsbolzen 36 wirkt mit einem Verriegelungselement 38 zusammen, das ortsfest am Fahrzeug bzw. im Rahmen 24 angeordnet ist. Im gezeigten Ausführungsbeispiel handelt es sich bei dem Verriegelungselement 38 um eine Drehfalle, die über ein Gestänge 40 mit einem Aktuator 42 verbunden ist und von diesem angetrieben wird. Aus Figur 1 ergibt sich, dass vorzugsweise zwei Verriegelungsbolzen 36 und entsprechend zwei Verriegelungselemente 38 vorgesehen sein können, die gemeinsam über einen Aktuator 42 betrieben werden. Selbstverständlich können auch zwei getrennte Aktuatoren für die beiden Verriegelungselemente 38 bzw. Drehfallen vorgesehen sein.

Die Figuren 2 bis 4 machen deutlich, dass der Verriegelungsbolzen 36 über ein Bolzenhalteelement 44 am Antriebsträger 26 befestigt ist. Dieses Bolzenhalteelement 44 umgreift eine Trägerwelle 46, über die der Antriebsträger 26 mit einer Führungsrolle 48 endseitig verbunden ist, die zwischen einer oberen Sicherungsschiene 50 und einer unteren Laufschiene 52 auf der unteren Laufschiene 52 in der Querführung 28 abrollt.

Wesentlich ist, dass das Bolzenhalteelement 44 um die Trägerwelle 46 drehbar bzw. schwenkbar auf dieser gelagert ist. Dadurch ist gewährleistet, dass der Verriegelungsbolzen 36 auch dann senkrecht steht, wenn sich der Antriebsträger 26 um seine Längsachse verdreht. Eine solche Verdrehung kann beispielsweise aufgrund von Ungenauigkeiten bei der Verlegung von Schienen oder auch durch andere fahrzeugbedingte Relaivbewegungen ermöglicht werden. Erfindungsgemäß ist aber gerade eine solche Verdrehung für die Funktion des Verriegelungssystems 20 weitgehend irrelevant, da der stets aufrecht bzw. senkrecht ausgerichtete Verriegelungsbolzen 36 das korrespondierende Verriegelungselemente 38 unabhängig von der Verdrehung des Antriebsträgers 26 beim Schließvorgang stets exakt trifft.

Das Bolzenhalteelement 44 ist mit einer Rollenhalterung 54 verbunden, an der wiederum zwei Stützrollen 56 angeordnet sind. Diese Stützrollen 56 laufen ebenfalls in der Querführung 28.

Die beidseitig der Führungsrolle 48 angeordneten Stützrollen 56 haben im gezeigten Ausführungsbeispiel einen kleineren Durchmesser als die Führungsrolle 48, wodurch diese nicht mit der oberen Laufschiene 50 in Kontakt kommt, sondern lediglich auf der unteren Laufschiene 52 abrollen. Die Stützrollen 56 sind über Achsstummel 58 in der Rollenhalterung 54 gelagert.

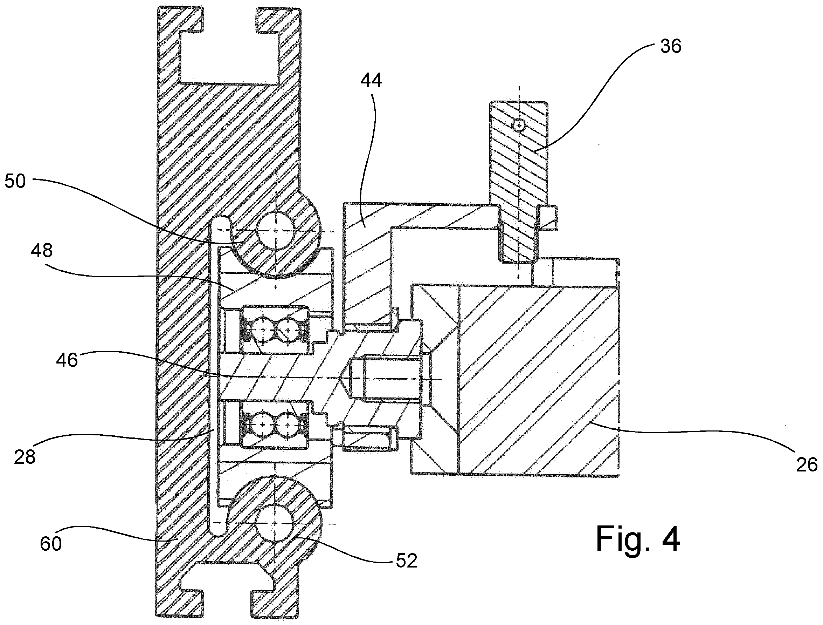

Die Figuren 2 und 4 verdeutlichen, wie die endseitig am Antriebsträger angeordneten Führungsrollen 48 in der Querführung 28, die in einem Halteteil 60 des Rahmens 24 angeordnet ist, geführt sind. Erkennbar ist, dass jeweils eine Lauffläche 62 der Führungsrolle 48 konkav ausgeführt ist, während die beiden Laufschienen 50, 52 eine konvexe Form aufweisen. Hierdurch wird erreicht, dass die Führungsrolle auch in seitlicher Richtung gehalten ist. Der vertikale Abstand der beiden Sicherungsschiene 50 und der Laufschiene 52 zueinander ist derart gewählt, dass die Führungsrolle 48 auf der unteren Laufschienen 50 abrollt, dabie die Sicherungsschiene 52 aber nicht kontaktiert. Der Abstand der Führungsrolle 48 zur Sicherungsschiene 52 ist so gewählt, das die Führungsrolle 48 in vertikaler Richtung nach oben gegen ein Herausspringen aus der Laufschiene 52, beispielsweise beim Überfahren von Bodenwellen, gesichert ist.

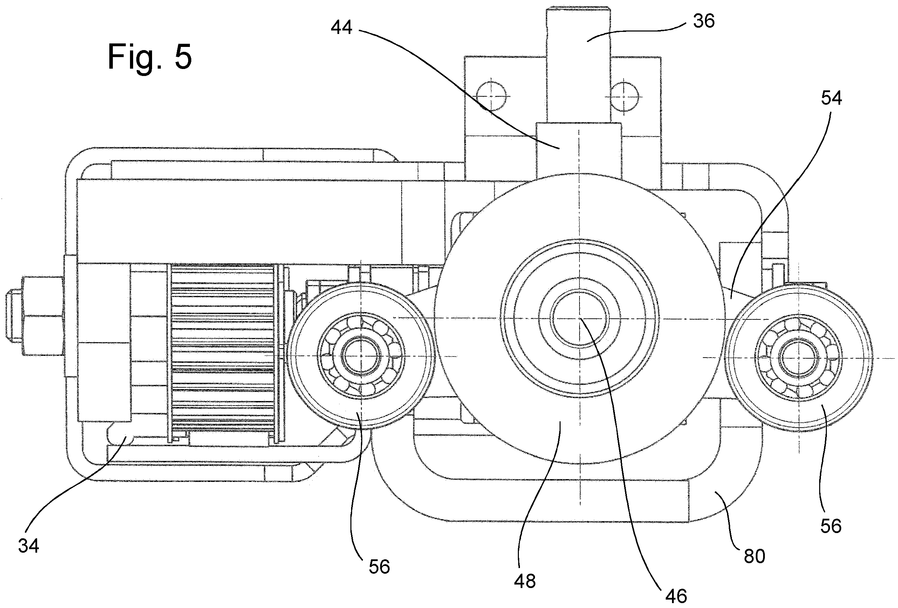

Figur 5 verdeutlicht den Aufbau der seitlichen Lagerung des Antriebsträgers 26 und des Verriegelungsbolzens 36 in den Querführungen 28 durch eine Seitenansicht auf eine der Endseiten des Antriebsträgers 26.

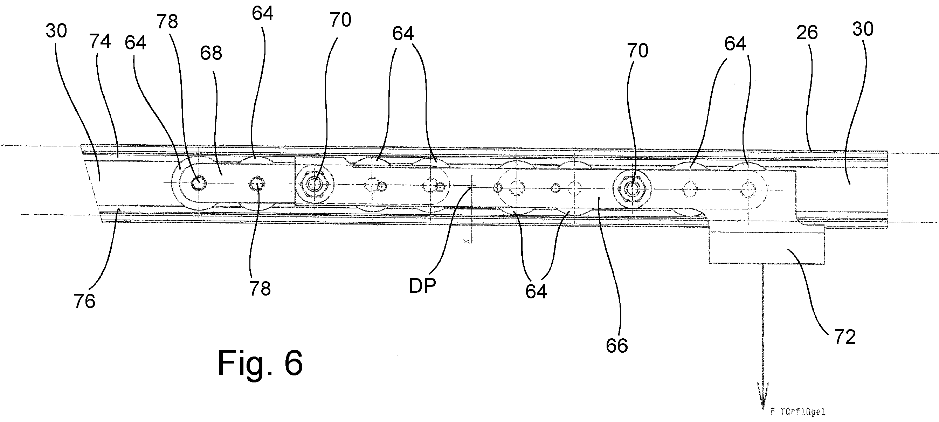

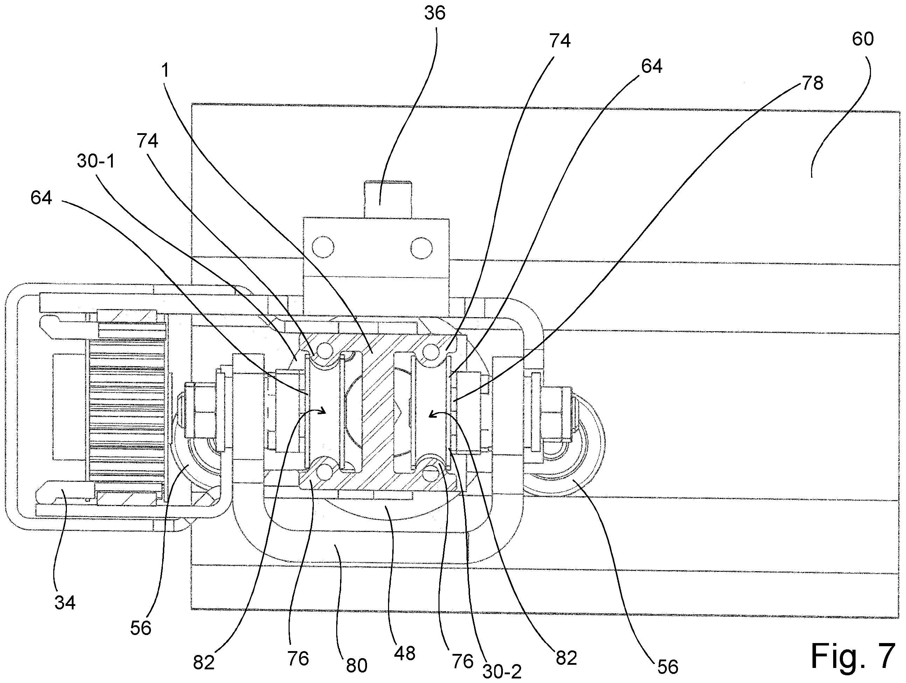

Aus den Figuren 6 und 7 (im Zusammenhang mit Figur 1) wird die Lagerung des mindestens einen Türflügels am Antriebsträger 26 deutlich. Grundsätzlich ist es zwar lediglich notwendig, dass der Türflügel über nur eine Rolle 64 in der Längsführung 30 geführt ist. Vorteilhafterweise weist das Türflügelbefestigungselement 32 jedoch einen Rollenläufer 66 auf, an dem im gezeigten Ausführungsbeispiel zwei Rollenhalter 68 nebeneinander drehbar gelagert sind. Die Lagerung der Rollenhalter 68 erfolgt über Drehlager 70, die Befestigung des Rollenläufers 66 an der Tür über eine Türflügelbefestigung 72.

Im gezeigten Ausführungsbeispiel weist jeder Rollenhalter 68 vier Rollen 64 auf, von denen jeweils zwei Rollen 64 rechts bzw. links des Drehlagers 70 angeordnet sind und die in der Längsführung 30 des Antriebsträgers 26 laufen.

Wesentlich ist, dass die Türflügelbefestigung 72, die Teil des Türflügelbefestigungselementes 32 ist, im Wesentlichen endseitig am Rollenläufers 66 angeordnet ist. Durch die Masse des Türflügels wird der Rollenläufer 66 im Bereich der Türflügelbefestigung 72 nach unten gezogen, wodurch sich der Rollenläufer 66 um einen Drehpunkt DP drehen würde, wenn die Rollen 64 nicht durch die Längsführung 30 gehalten werden würden. Durch diese endseitige Belastung werden die Rollen 64, die auf der der Türflügelbefestigung 72 gegenüberliegenden Seite des Drehpunkts DP angeordnet sind, nach oben gegen eine obere Längslaufschiene 74 bewegt, während die auf der gleichen Seite wie die Türflügelbefestigung 72 angeordneten Rollen 64 auf eine untere Längslaufschiene 76 gezogen werden. Durch diesen Aufbau wird erreicht, dass die Lastverteilung auf die Rollen 64 ausgesprochen gleichmäßig erfolgt und der Türflügel sicher in der Längsführung 30 geführt ist.

Figur 7 macht deutlich, dass der Antriebsträger 26 entlang seiner Längsachse zwei Längsführungen 30 aufweist, eine einem Fahrzeugraum zugewandte innere Längsführung 30-1 und eine gegenüberliegende äußere Längsführung 30-2. Die Rollen 64 sind über Rollenachsstummel 78 in je einem L-Profil 80 gelagert, die den Antriebsträger 26 umgreifen.

In den Längsführungen 30-1, 30-2 sind die Rollen 64 ebenfalls in horizontaler und vertikaler Richtung dadurch gehalten, dass deren Rollenlauffläche konkav ausgebildet ist, während Laufflächen der unteren und oberen Längslaufschiene 74, 76 ausgeführt sind und der vertikale Abstand der beiden Längslaufschiene 74,76 derart ausgeführt ist, dass die Rollen 64 beide Längslaufschiene 74,76 kontaktieren.

Die Erfindung ist nicht auf die gezeigten Ausführungsbeispiele beschränkt, sondern umfasst gleichwirkende Ausführungsvarianten. Beispielsweise ist das erfindungsgemäße Verriegelungssystem 20 auch ohne die vorteilhafte Lagerung der Türflügel in der Längsführung 30 des Antriebsträgers 26 einsetzbar.

## Patentansprüche

1. Türanordnung für ein Fahrzeug mit mindestens einem Türflügel, wobei der Türflügel von einem Schließzustand, in dem der Türflügel eine Portalöffnung in einer Wand des Fahrzeugs ausfüllt in einen Öffnungszustand, in dem sich der Türflügel vor der Wand und zumindest weitgehend außerhalb der Portalöffnung befindet, bewegbar ist, wobei die Türanordnung aufweist
a) zwei Querführungen (28), die im Wesentlichen entlang einer Y-Achse rechtwinklig zur Portalöffnungsebene verlaufen,
b) einen Antriebsträger (26), der sich zwischen den Querführungen (28) befindet und eine Längsführung (30) für den mindestens einen Türflügel aufweist, wobei die Längsführung (30) eine Bewegung des Türflügels entlang einer X-Achse im Wesentlichen in horizontaler Richtung parallel zur Wand ermöglicht,
c) mindestens zwei Führungsrollen (48) die
- jeweils endseitig am Antriebsträger (26) angeordnet sind,
- den Antriebsträger (26) in den Querführungen (28) lagern und eine Bewegung des Antriebsträgers (26) entlang der Y-Achse rechtwinklig zur Portalöffnungsebene ermöglichen,
**gekennzeichnet durch**
d) mindestens einen Verriegelungsbolzen (36), der am Antriebsträger (26) angeordnet und unabhängig vom Antriebsträger um die Längsachse des Antriebsträgers (26) schwenkbar ist,
e) mindestens ein mit dem Verriegelungsbolzen (36) korrespondierendes Verriegelungselement (36), das ortsfest am Fahrzeug angeordnet ist,
wobei die Führungsrollen (48) jeweils über Trägerwellen (46) mit dem Antriebsträger (26) verbunden sind und der Verriegelungsbolzen (36) drehbar auf einer der Trägerwellen (46) gelagert ist und, wobei mindestens eine Führungsrolle (48) eine Schwenkbewegung des Antriebsträgers (26) um seine Längsachse und somit des Türflügels aus der Vertikalen heraus ermöglicht.

2. Türanordnung nach Anspruch 1, **dadurch gekennzeichnet, dass** der Verriegelungsbolzen (36) mit einem Bolzenhalteelement (44) verbunden ist, das um die Trägerwelle (46) drehbar ist und über zumindest eine Stützrolle (56) in einer der Querführungen (28) geführt ist.

3. Türanordnung nach Anspruch 2 oder Anspruch 3, **dadurch gekennzeichnet, dass** das Verriegelungselement (38) durch eine Drehfalle gebildet ist.

4. Türanordnung nach einem der Anspruche 1 bis 3, **dadurch gekennzeichnet, dass** das Verriegelungselement (38) von einem Aktuator (42) angetrieben wird, der ortsfest am Fahrzeug angeordnet ist.

5. Türanordnung nach einem der Ansprüche 2 bis 4, **dadurch gekennzeichnet, dass** das Bolzenhalteelement (44) zwei Stützrollen (56) aufweist, zwischen denen die Führungsrolle (48) angeordnet ist.

6. Türanordnung nach einem der Ansprüche 4 bis 5, **dadurch gekennzeichnet, dass** an einem Antriebsträger (26) zwei Türflügel gelagert sind, die jeweils einen Verriegelungsbolzen (36) aufweisen, der jeweils mit einem Verriegelungselement (38) zusammenwirkt, wobei beide Verriegelungselemente (38) über nur einen Aktuator (42) angetrieben werden.

7. Türanordnung nach einem der Ansprüche 1 bis 6, **dadurch gekennzeichnet, dass** in der Längsführung (30) des Antriebsträgers (26) ein Türflügelbefestigungselement (32) über mindestens eine Rolle (64) geführt ist.

8. Türanordnung nach Anspruch 7, **dadurch gekennzeichnet, dass** das Türflügelbefestigungselement (32) einen Rollenläufer (66) aufweist, an dem zwei Rollenhalter (68) jeweils über ein Drehlager (70) nebeneinander drehbar gelagert sind.

9. Türanordnung nach Anspruch 8, **dadurch gekennzeichnet, dass** das Türflügelbefestigungselement (32) eine Türflügelbefestigung (72) für den Türflügel aufweist, die im Wesentlichen endseitig am Rollenläufer (66) angeordnet ist, so dass diejenigen Rollen (64), die auf der der Türflügelbefestigung (72) gegenüberliegenden Seite eines Drehpunkts (DP) angeordnet sind, nach oben gegen eine obere Längslaufschiene (74) und die auf der gleichen Seite wie die Türflügelbefestigung (72) angeordneten Rollen (64) auf eine untere Längslaufschiene (76) gezogen werden.

10. Türanordnung nach einem der Ansprüche 1 bis 9, **dadurch gekennzeichnet, dass** beide Führungsrollen (48) eine Schwenkbewegung des Antriebsträgers (26) um seine Längsachse und somit des Türflügels aus der Vertikalen heraus ermöglichen.

## Claims

1. A door assembly for a vehicle with at least one door leaf, wherein the door leaf can be moved from a closing state, in which the door leaf fills a portal opening in a wall of the vehicle, into an opening state, in which the door leaf is located in front of the wall and at least largely outside the portal opening, the door assembly comprising
a) two transverse guides (28) substantially extending along a Y-axis perpendicular to the portal opening plane,
b) a drive carrier (26) located between the transverse guides (28) and having a longitudinal guide (30) for the at least one door leaf, wherein the longitudinal guide (30) enables a movement of the door leaf along an X-axis substantially in the horizontal direction parallel to the wall,
c) at least two guide rollers (48), which
- are each disposed at the end of the drive carrier (26),
- support the drive carrier (26) in the transverse guides (28) and enable a movement of the drive carrier (26) along the Y-axis perpendicular to the portal opening plane,
**characterized by**
d) at least one locking bolt (36), which is disposed on the drive carrier (26) and is pivotable about the longitudinal axis of the drive carrier (26) independently of the drive carrier,
e) at least one locking member (36), which corresponds to the locking bolt (36) and is disposed in a stationary manner on the vehicle,
wherein the guide rollers (48) are respectively connected to the drive carrier (26) via carrier shafts (46), and the locking bolt (36) is rotatably supported on one of the carrier shafts (46), and wherein at least one guide roller (48) enables a pivoting movement of the drive carrier (26) about its longitudinal axis, and thus of the door leaf out of the vertical.

2. The door assembly according to claim 1, **characterized in that** the locking bolt (36) is connected to a bolt holding member (44) that is rotatable about the carrier shaft (46) and is guided in one of the transverse guides (28) via at least one supporting roller (56).

3. The door assembly according to claim 2 or claim 3, **characterized in that** the locking member (38) is formed by a rotary latch.

4. The door assembly according to any one of the claims 1 to 3, **characterized in that** the locking member (38) is driven by an actuator (42) disposed in a stationary manner on the vehicle.

5. The door assembly according to any one of the claims 2 to 4, **characterized in that** the bolt holding member (44) has two supporting rollers (56) between which the guide roller (48) is disposed.

6. The door assembly according to any one of the claims 4 to 5, **characterized in that** two door leaves are supported on a drive carrier (26), each of which has a locking bolt (36) that respectively cooperates with a locking member (38), wherein both locking members (38) are driven by only one actuator (42).

7. The door assembly according to any one of the claims 1 to 6, **characterized in that** a door leaf attaching member (32) is guided by at least one roller (64) in the longitudinal guide (30) of the drive carrier (26).

8. The door assembly according to claim 7, **characterized in that** the door leaf attaching member (32) has a roller slide (66) on which two roller holding members (68), in each case by means of rotary bearing (70), are rotatably supported next to one another.

9. The door assembly according to claim 8, **characterized in that** the door leaf attaching member (32) has a door leaf attaching means (72) for the door leaf, which is disposed substantially at the end of the roller slide (66), so that those rollers (64) that are disposed on the side of a pivot point (DP) opposite to the door leaf attaching means (72) are pulled upwards against an upper longitudinal sliding rail (74), and the rollers (64) disposed on the same side as the door leaf attaching means (72) are pulled onto a lower longitudinal sliding rail (76).

10. The door assembly according to any one of the claims 1 to 9, **characterized in that** both guide rollers (48) enable a pivoting movement of the drive carrier (26) about its longitudinal axis, and thus of the door leaf out of the vertical.

## Revendications

1. Ensemble de porte pour un véhicule, comprenant au moins un vantail de porte, dans lequel le vantail de porte peut être déplacé depuis un état de fermeture où le vantail de porte comble une ouverture de portail ménagée dans une paroi du véhicule, dans un état d'ouverture où le vantail de porte est situé devant ladite paroi et au moins dans une large mesure à l'extérieur de l'ouverture de portail, dans lequel ledit ensemble de porte présente
a) deux guides transversaux (28) qui s'étendent pour l'essentiel suivant un axe Y à angle droit par rapport au plan de l'ouverture de portail,
b) un support d'entraînement (26) qui se trouve entre les guides transversaux (28) et présente un guide longitudinal (30) pour ledit au moins un vantail de porte, ledit guide longitudinal (30) permettant un déplacement du vantail de porte suivant un axe X pour l'essentiel dans la direction horizontale parallèle à la paroi,
c) au moins deux galets de guidage (48) qui
- sont disposés chacun à l'extrémité sur ledit support d'entraînement (26),
- logent le support d'entraînement (26) dans les guides transversaux (28) et permettent un mouvement du support d'entraînement (26) suivant l'axe Y à angle droit par rapport au plan de l'ouverture de portail, **caractérisé par**
d) au moins un boulon de verrouillage (36) qui est disposé sur le support d'entraînement (26) et peut pivoter autour de l'axe longitudinal du support d'entraînement (26) indépendamment du support d'entraînement,
e) au moins un élément de verrouillage (38) correspondant avec ledit boulon de verrouillage (36) et qui est disposé à poste fixe sur le véhicule,
dans lequel les galets de guidage (48) sont reliés chacun par des arbres de support (46) audit support d'entraînement (26), et ledit boulon de verrouillage (36) est logé à rotation sur l'un des arbres de support (46), et dans lequel au moins un galet de guidage (48) permet un mouvement pivotant du support d'entraînement (26) autour de son axe longitudinal et ainsi du vantail de porte hors de la verticale.

2. Ensemble de porte selon la revendication 1, **caractérisé par le fait que** le boulon de verrouillage (36) est relié à un élément de maintien de boulon (44) qui peut tourner autour de l'arbre de support (46) et est guidé par au moins un galet d'appui (56) dans l'un des guides transversaux (28).

3. Ensemble de porte selon la revendication 2 ou la revendication 3, **caractérisé par le fait que** ledit élément de verrouillage (38) est formé par un pêne demi-tour tournant.

4. Ensemble de porte selon l'une quelconque des revendications 1 à 3, **caractérisé par le fait que** ledit élément de verrouillage (38) est entraîné par un actionneur (42) qui est disposé à poste fixe sur le véhicule.

5. Ensemble de porte selon l'une quelconque des revendications 2 à 4, **caractérisé par le fait que** ledit élément de maintien de boulon (44) présente deux galets d'appui (56) entre lesquels est disposé le galet de guidage (48).

6. Ensemble de porte selon l'une quelconque des revendications 4 à 5, **caractérisé par le fait que** deux vantaux de porte sont disposés sur un support d'entraînement (26), qui présentent chacun un boulon de verrouillage (36) lequel agit de concert respectivement avec un élément de verrouillage (38), dans lequel les deux éléments de verrouillage (38) sont entraînés par un actionneur (42) seulement.

7. Ensemble de porte selon l'une quelconque des revendications 1 à 6, **caractérisé par le fait qu'**un élément de fixation de vantail de porte (32) est guidé dans ledit guide longitudinal (30) du support d'entraînement (26) par au moins un galet (64).

8. Ensemble de porte selon la revendication 7, **caractérisé par le fait que** ledit élément de fixation de vantail de porte (32) présente un curseur à galets (66) sur lequel deux porte-galets (68) sont logés chacun à rotation l'un à côté de l'autre par un palier rotatif (70).

9. Ensemble de porte selon la revendication 8, **caractérisé par le fait que** ledit élément de fixation de vantail de porte (32) présente une fixation de vantail de porte (72) pour le vantail de porte qui est agencée pour l'essentiel à l'extrémité sur ledit curseur à galets (66) de sorte que les galets (64) qui sont disposés du côté d'un pivot (DP) qui est opposé à la fixation de vantail de porte (72) sont tirés vers le haut contre un rail de roulement longitudinal (74) supérieur et que les galets (64) disposés du même côté que la fixation de vantail de porte (72) sont tirés sur un rail de roulement longitudinal (76) inférieur.

10. Ensemble de porte selon l'une quelconque des revendications 1 à 9, **caractérisé par le fait que** les deux galets de guidage (48) permettent un mouvement pivotant du support d'entraînement (26) autour de son axe longitudinal et ainsi du vantail de porte hors de la verticale.
